# DEMANDE DE BREVET EUROPEEN

(11) **EP 4 371 734 A1**
(43) Date de publication de la demande: **22.05.2024**
(21) Numéro de dépôt: 23205366.0
(22) Date de dépôt: 23.10.2023
(51) Int. Cl.: B29C 64/118, B29C 64/209, B29C 64/336, B29C 48/05, B29C 48/154, B29C 48/25, B29C 48/285, B29C 48/30, B29C 48/345, B33Y 10/00, B33Y 30/00, B33Y 40/00, B33Y 70/10

(54) **OUTILLAGE D'EXTRUSION DE FILAMENT RENFORCE POUR FABRICATION ADDITIVE**

(30) Priorité: 16.11.2022 FR 2211927
(71) Demandeur: Zero D., 67140 Barr (FR)
(72) Inventeur: DOREZ, Yannick, 67140 BARR (FR)
(74) Mandataire: Merckling, Norbert

(57) **Abrégé**

L'invention concerne un outillage d'extrusion (1) pour délivrer un filament (8) destiné à une fabrication additive par dépôt de fil, ledit filament comportant une fibre de renfort longue et continue enrobée d'un matériau thermoplastique (M1), comprenant un bloc d'alimentation (2) associé à un système d'alimentation et de chauffe (4) du matériau thermoplastique (M1), une buse de recouvrement (7), une buse d'engagement et de guidage (9) traversant le bloc d'alimentation (2) et en partie la buse de recouvrement (7) pour engager et guider la fibre de renfort à travers l'outillage d'extrusion (1), la buse d'engagement et de guidage (9) débouchant dans la buse de recouvrement (7), au moins un canal (10) aménagé dans le bloc d'alimentation (2) et au moins un espace de répartition (11) ménagé en périphérie d'une partie de la buse d'engagement et de guidage (9), de manière à acheminer sous pression le matériau thermoplastique (M1) fondu dans un espace annulaire (12) s'étendant autour de ladite buse d'engagement et de guidage (9) et enrober ainsi avec ledit matériau thermoplastique (M1) en fusion la fibre de renfort (6) dans la buse de recouvrement (7), dès sa sortie de la buse d'engagement et de guidage (9), caractérisé en ce que la buse de recouvrement (7) est montée sur un bloc de recouvrement (3), ledit bloc de recouvrement (3) étant fixé sous le bloc d'alimentation (2), la buse d'engagement et de guidage (9) traversant le bloc de recouvrement (3) et l'espace de répartition (11) étant ménagé à l'interface du bloc d'alimentation (2) et du bloc de recouvrement (3).

## Description

### Domaine technique

La présente invention se rapporte au domaine technique général de la fabrication de filaments fondus (FFF) et de la fabrication additive par dépôt de fil (FDM). L'invention se rapporte donc à des dispositifs et systèmes de dépose de polymères fondus et de mise en forme sur un support par un système automatisé.

L'invention concerne plus particulièrement le domaine des dispositifs de fabrication additive, d'impression 3D, de sur-impression 3D ou de tout autre dispositif similaire utilisant un filament renforcé.

Par filament renforcé, il convient d'entendre un filament comportant une âme, en général souple mais non thermoformable, présentant des performances mécaniques accrues. Cette âme, est constituée d'une fibre de renfort longue et continue, minérale, organique ou métallique. A titre d'exemple, on peut citer la fibre de verre, la fibre de carbone, la fibre de lin, la fibre de chanvre, la fibre de cuivre ou la fibre de basalte. Une telle fibre de renfort est alors enrobée d'au moins un matériau thermoplastique pour constituer le filament renforcé.

### Etat de la technique

La fabrication additive à base de matériaux polymères, connue sous la dénomination impression 3D par le grand public, consiste à déposer et superposer des couches de matières sur un support avec un dispositif adapté selon les cordonnées transmises par un fichier 3D, ce dispositif comportant généralement un système automatisé de type robot multiaxes ou portique ou tripode ou table croisée motorisée.

La technique de fabrication de pièces la plus connue repose sur une technique de modelage par dépôt de filament polymères en fusion de section circulaire à partir d'une bobine de fil de matière thermoplastique. Cette technique consiste à déposer couche par couche un filament ou jonc de matière thermoplastique fondu souvent au-dessus de 200°C qui, en se superposant, donne forme à l'objet. La tête d'impression se déplace selon des coordonnées X, Y et Z (longueur, largeur et hauteur) ou R, θ, Z (rayon, angle hauteur) transmises par un fichier 3D correspondant au modèle 3D de l'objet à fabriquer. Selon cette technique antérieure, le jonc est monomatière, de diamètre constant et il est déposé selon un axe d'extrusion habituellement vertical, ou du moins perpendiculaire au plan de dépose.

Si elle permet de fabriquer des objets de toutes sortes ou de réparer des objets cassés, cette technique de fabrication présente aussi de nombreuses limitations.

Tout d'abord, la technique classique de modelage par dépôt de filament en fusion est très lente, car le diamètre du fil de matière thermoplastique déposé est très faible et la matière est par conséquent déposée en très petite quantité. Une augmentation du diamètre du fil permet de répondre à ce problème de lenteur, mais pose alors des problèmes d'esthétisme et de solidité de l'objet fabriqué qui sont dus à la superposition de joncs de matière de forme cylindrique qui adhèrent mal les uns aux autres en raison de leur section circulaire. Malgré des améliorations constantes, cette technique est d'ailleurs connue pour le manque de solidité des objets fabriqués et pour l'aspect peu esthétique de ces derniers, qui présentent un aspect grumeleux au lieu d'être lisses.

Une autre limitation de la technique classique de modelage par dépôt de filament en fusion est qu'elle ne permet de déposer qu'une seule matière à la fois, et ne permet pas de déposer plusieurs matières distinctes simultanément. Pour des raisons évidentes de solidité de l'objet fabriqué, la matière déposée doit en outre se souder à celle déposée dans les autres strates, ce qui limite le nombre de matières pouvant être utilisées par cette technique.

La technique classique de modelage par dépôt de filament en fusion n'est pas non plus prévue pour permettre de renforcer l'objet fabriqué par l'ajout d'un renfort continu, par exemple une fibre de verre ou de carbone, lors du dépôt de filament en fusion. En effet, lorsque l'on souhaite déposer par l'intermédiaire d'une impression 3D des filaments renforcés, on se heurte à des difficultés additionnelles, car l'âme du filament renforcé n'est pas thermoformable. Les têtes d'impression 3D standards sont conçues pour être alimentées par un filament dont la section d'entrée, donné par son diamètre est de 1,75 mm ou de 2,85 mm. La section de sortie des têtes d'impression 3D est donnée par le diamètre de l'orifice d'une buse d'impression, lequel est généralement compris entre 0,4 mm et 1,00 mm. Un filament de renfort présente donc un enrobage dont la matière peut être ramollie ou fondue et par conséquent formable, contrairement à la fibre de renfort. Il est donc impossible d'utiliser des filaments renforcés présentant un diamètre standard dans des têtes d'impression standards.

On connaît par l'intermédiaire du document US 10, 562, 226 B1, un outillage d'extrusion pour délivrer un filament renforcé comportant une fibre de renfort enrobée d'un matériau thermoplastique, caractérisé en ce qu'il comprenant un bloc d'alimentation associé à un système d'alimentation et de chauffe du matériau thermoplastique, une buse de recouvrement, une buse d'engagement et de guidage traversant en partie la buse de recouvrement pour engager et guider la fibre de renfort à travers l'outillage d'extrusion, la buse d'engagement et de guidage débouchant dans la buse de recouvrement, au moins un canal aménagé dans le bloc d'alimentation et au moins un espace de répartition ménagé à en périphérie d'une partie de la buse d'engagement et de guidage, de manière à acheminer sous pression le matériau thermoplastique fondu dans un espace annulaire s'étendant autour de ladite buse d'engagement et de guidage et enrober ainsi avec ledit matériau thermoplastique en fusion la fibre de renfort dans la buse de recouvrement. L'outillage décrit comprend en outre un outil de coupe pour sectionner le filament renforcé. Ce document ne décrit pas un bloc de recouvrement sur lequel est montée la buse de recouvrement.

On connaît également par l'intermédiaire du document EP 2 444 227 A1, un procédé de fabrication d'une bande LED en robée d'un matériau thermoplastique. L'outillage d'extrusion décrit dans ce document ne comporte pas de de buse de recouvrement montée sur un bloc de recouvrement.

### Description de l'invention

L'objet de la présente invention vise par conséquent à pallier les inconvénients de l'art antérieur en proposant un nouvel outillage d'extrusion pour la fabrication d'un filament renforcé destinée à être utilisé à une tête d'impression 3D standard.

Un autre objet de la présente invention vise à proposer un nouvel outillage d'extrusion permettant de fabriquer un filament renforcé en utilisant un ou plusieurs matériaux thermoplastiques différents et non miscibles.

Un autre objet de la présente invention vise à proposer un nouveau système de fabrication additive permettant de s'affranchir de l'utilisation d'une tête d'impression standard.

Un autre objet de la présente invention vise à proposer une sécabilité du filament renforcé en utilisant un dimensionnement, respectivement de la fibre de renfort et du matériau thermoplastique.

L'outillage d'extrusion conforme à l'invention présente l'avantage remarquable qu'il peut pour certaines fabrications additives remplacer la tête d'impression 3D du système de fabrication additive.

Un autre avantage de l'outillage d'extrusion conforme à l'invention réside dans sa capacité à fabriquer un filament renforcé susceptible d'être déposé sur un support par impression directe dudit filament renforcé.

Un autre avantage de l'outillage d'extrusion conforme à l'invention réside dans sa capacité à fabriquer un filament renforcé susceptible d'être déposé sur un support par l'intermédiaire d'une tête d'impression (appelée aussi tête de dépose) standard, jusqu'alors impossible.

Un autre avantage de l'outil d'extrusion conforme à l'invention réside dans la possibilité d'obtenir par coextrusion un filament renforcé présentant un gainage de la fibre de renfort avec un ou plusieurs matériaux thermoplastiques différents et non miscibles. Le gainage peut avantageusement être constitué d'un coeur et d'une peau externe, présentant des propriétés mécaniques ou physicochimiques respectives différentes. Le coeur du gainage, par exemple une matière thermoplastique compacte ou expansée, par exemple recyclée est avantageusement constitué d'une matière favorisant l'adhésion avec la fibre de renfort. La peau externe est avantageusement constituée d'une matière thermoplastique améliorant l'adhésion des différentes couches entre-elles, d'une matière présentant des propriétés d'absorption des chocs, de porosité et/ou des propriétés de conductivité électrique ou thermique différentes de celles du coeur.

Un autre avantage de l'outillage d'extrusion conforme à l'invention réside la possibilité de fabriquer un filament renforcé présentant un gainage comprenant une, deux ou davantage de couches de matériaux thermoplastiques.

La configuration de l'outillage d'extrusion conforme à l'invention présente par ailleurs l'avantage que la structure du filament renforcé (coeur(s) et peau(x)) est conservée lors de son impression.

En outre, le système de fabrication additive par dépôt de fil conforme à l'invention est remarquable par le fait qu'il permet de s'affranchir d'un outil de coupe pour sectionner le filament renforcé à la fin de l'opération de pose.

Les objets assignés à l'invention sont atteints à l'aide d'un outillage d'extrusion pour délivrer un filament renforcé destiné à une fabrication additive par dépôt de fil, ledit filament renforcé comportant une fibre de renfort longue et continue, enrobée d'au moins un matériau thermoplastique M1, caractérisé en ce qu'il comprend un bloc d'alimentation associé à un système d'alimentation et de chauffe du matériau thermoplastique M1, un bloc de recouvrement fixé sous le bloc d'alimentation, une buse de recouvrement montée sur le bloc de recouvrement, une buse d'engagement et de guidage traversant le bloc d'alimentation, le bloc de recouvrement et en partie la buse de recouvrement pour engager et guider la fibre de renfort à travers l'outillage d'extrusion, la buse d'engagement et de guidage débouchant dans la buse de recouvrement, au moins un canal aménagé dans le bloc d'alimentation et au moins un espace de répartition ménagé à l'interface du bloc d'alimentation et du bloc de recouvrement et en périphérie d'une partie de la buse d'engagement et de guidage, de manière à acheminer sous pression le matériau thermoplastique M1 en fusion dans un espace annulaire s'étendant autour de ladite buse d'engagement et de guidage et enrober ainsi avec ledit matériau thermoplastique M1 en fusion la fibre de renfort dans la buse de recouvrement, dès sa sortie de la buse d'engagement et de guidage.

Selon un exemple de réalisation, l'outillage d'extrusion comprend au moins un canal complémentaire et au moins un espace de répartition complémentaire aménagés dans le bloc recouvrement, ledit espace de répartition complémentaire s'étendant en périphérie d'une partie de la buse d'engagement et de guidage, pour amener sous pression au moins un autre matériau thermoplastique M2 fondu, délivré par un autre système d'alimentation et de fusion, dans l'espace annulaire entourant la buse d'engagement et de guidage et contenant le matériau thermoplastique M1 fondu, pour que ledit autre matériau thermoplastique s'étende autour du matériau thermoplastique M1.

Selon un exemple de réalisation, le matériau thermoplastique M1 et l'autre matériau thermoplastique M2 sont des matériaux différents et non miscibles, de sorte que l'autre matériau thermoplastique M2 forme une peau enveloppant un coeur formé par le matériau thermoplastique M1 enrobant la fibre de renfort 6.

Selon un exemple de réalisation, la buse de recouvrement présente un orifice d'extrusion de révolution, évasé, du genre pavillon de trompette, permettant d'améliorer la qualité de dépose du filament renforcé comportant la fibre de renfort.

Selon un exemple de réalisation, la buse de recouvrement présente un orifice d'extrusion dont la forme géométrique, du genre rainurée ou alvéolée, s'inscrit dans un cercle de diamètre donné d et dont l'aire est inférieure à l'aire d'un cercle de même diamètre d.

Les objets assignés à l'invention sont atteints également à l'aide d'un système de fabrication additive par dépôt de fil comprenant une tête de dépose, un outillage d'extrusion décrit ci-dessus et des organes d'actionnement pour déplacer la tête de dépose en translation selon trois axes orthogonaux ou suivant un déplacement vectoriel ou suivant un déplacement polaire ou tripode, dans un plan parallèle à un plan de dépose du filament renforcé, caractérisé en ce que l'outillage d'extrusion constitue la tête de dépose.

Selon un exemple de réalisation, le système de fabrication additive par dépôt de fil comprend des moyens de commande pour commander en fin de l'opération de dépose, une accélération brusque du mouvement de déplacement ou une rétractation rapide de l'outillage d'extrusion, générant une élongation puis un sectionnement du filament renforcé au voisinage de la buse de recouvrement.

Les objets assignés à l'invention sont atteints également à l'aide d'un système de fabrication additive par dépôt de fil comprenant une tête de dépose, des organes d'actionnement pour déplacer la tête de dépose en translation selon trois axes orthogonaux ou suivant un déplacement vectoriel ou suivant un déplacement polaire ou tripode, dans un plan parallèle à un plan de dépose, caractérisé en ce qu'il comprend un outillage d'extrusion conforme à la revendication 5, délivrant le filament renforcé pour alimenter la tête de dépose, laquelle comprend des organes de chauffe complémentaires pour ramollir le matériau thermoplastique M1 ou pour ramollir le matériau thermoplastique M1 enveloppé par l'autre matériau thermoplastique M2 et permettre ainsi d'effectuer une impression 3D du filament renforcé.

Selon un exemple de réalisation du système de fabrication additive, l'outillage d'extrusion est embarqué de manière à se déplacer avec la tête de dépose.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue de profil d'un exemple de réalisation d'un outillage d'extrusion conforme à l'invention, permettant par exemple la fabrication d'un filament renforcé
- la figure 2 est une vue en coupe de l'outillage d'extrusion de la figure 1,
- la figure 3 est un agrandissement partiel de la figure 2,
- la figure 4 est une vue de face d'un exemple de filament renforcé obtenu à l'aide de l'outillage d'extrusion conforme à l'invention,
- la figure 5 est une vue en coupe longitudinale du filament renforcé de la figure 4,
- la figure 6 est une vue en coupe d'un autre exemple de réalisation de l'outillage d'extrusion conforme à l'invention, permettant par exemple une fabrication additive directe d'un objet imprimé sans passer par une étape de réchauffement du filament renforcé,
- la figure 7 est un détail agrandi de la figure 6,
- la figure 8 est une vue en coupe de l'outillage d'extrusion de la figure 2 dans le cadre d'une autre utilisation,
- la figure 9 est un détail agrandi de la figure 8,
- la figure 10 est une vue en coupe d'un autre exemple de réalisation de l'outillage d'extrusion conforme à l'invention, permettant par exemple une fabrication d'un filament renforcé comportant par exemple deux couches de matières thermoplastiques autour d'une fibre de renfort continue,
- la figure 11 est un détail agrandi de la figure 10,
- la figure 12 est une vue de face d'un autre exemple de filament renforcé obtenu avec l'outillage d'extrusion conforme à l'invention et illustré à la figure 10,
- la figure 13 est une vue en coupe longitudinale du filament renforcé de la figure 12, comportant dans cet exemple deux couches de matières thermoplastiques autour d'une fibre de renfort continue,
- la figure 14 est une vue de face d'un exemple de réalisation d'une buse de recouvrement de l'outillage d'extrusion conforme à l'invention,
- la figure 15 est une vue de profil de la buse de recouvrement de la figure 14,
- la figure 16 une vue de face d'un autre exemple de réalisation d'une buse de recouvrement de l'outillage d'extrusion conforme à l'invention, et
- la figure 17 est une vue de profil de la buse de recouvrement de la figure 16.

### Mode(s) de réalisation de l'invention

Les éléments structurellement et fonctionnellement identiques présents sur plusieurs figures distinctes, sont affectés d'une même référence numérique ou alphanumérique.

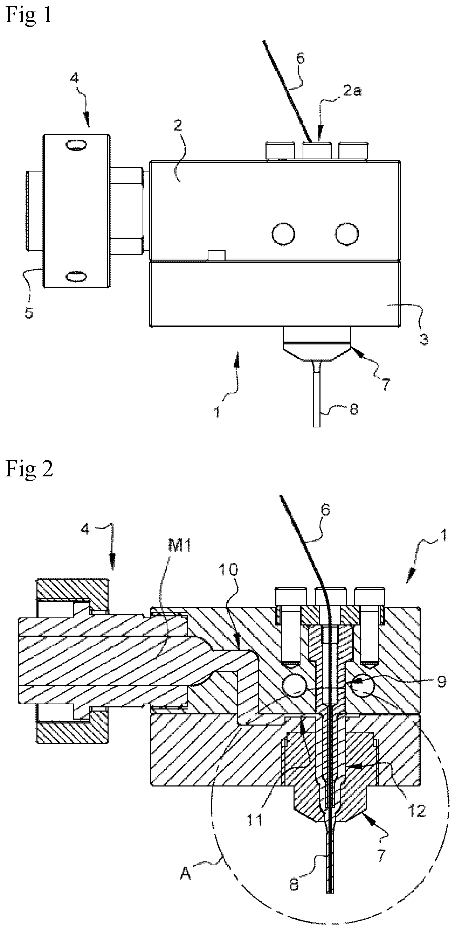

La figure 1 est une vue de profil d'un exemple de réalisation d'un outillage d'extrusion 1 comportant un bloc d'alimentation 2 et un bloc de recouvrement 3 fixé sous ledit bloc d'alimentation 2 par tous moyens, notamment des vis.

L'outillage d'extrusion 1 comporte également un système d'alimentation et de chauffe 4 pour injecter un matériau thermoplastique fondu dans ledit bloc d'alimentation 2. Le système d'alimentation et de chauffe 4 est par exemple vissé sur le bloc d'alimentation 2. Un écrou de blocage 5, monté sur le système d'alimentation et de chauffe 4, permet avantageusement de bloquer l'outillage d'extrusion 1 sur un support.

Le bloc d'alimentation 2 comporte une ouverture supérieure 2a pour y engager un filament de renfort 6. Ce dernier est pourvu d'un gainage en matière thermoplastique lorsqu'il est expulsé du bloc de recouvrement 3 par l'intermédiaire d'une buse de recouvrement 7 vissée dans ledit bloc de recouvrement 3. L'outillage d'extrusion 1 permet donc de délivrer un filament renforcé 8.

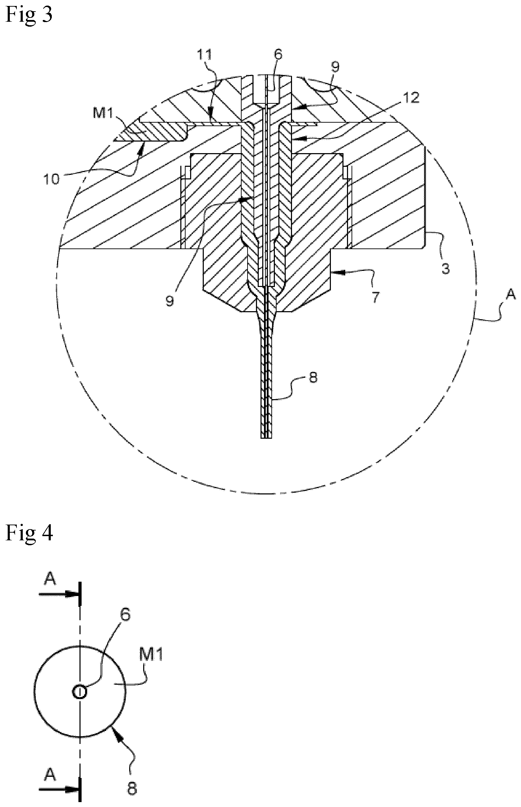

La figure 2 est une vue en coupe de l'outillage d'extrusion 1 et la figure 3 est un agrandissement partiel A de la figure 2.

L'outillage d'extrusion 1 comporte une buse d'engagement et de guidage 9 traversant le bloc d'alimentation 2, le bloc de recouvrement 3 et en partie la buse de recouvrement 7, pour engager et guider la fibre de renfort 6 à travers l'outillage d'extrusion 1. L'ouverture supérieure 2a est donc située au-dessus et en regard de l'orifice d'entrée de la buse d'engagement et de guidage 9. Cette dernière est maintenue et fixée dans le bloc d'alimentation 2 à l'aide d'une rondelle de serrage 9a et des vis 9b.

L'outillage d'extrusion 1 comporte également un canal (10) et un espace de répartition 11 aménagés respectivement dans le bloc d'alimentation 2 et à l'interface du bloc d'alimentation 2 et du bloc de recouvrement 3, ledit espace de répartition 11 s'étendant en périphérie de la buse d'engagement et de guidage 9. Le canal 10, l'espace de répartition 11 et un espace annulaire 12 entourant une partie de la buse d'engagement et de guidage 9, sont en communication fluidique pour acheminer le matériau thermoplastique M1 fondu, sous pression, dans l'espace annulaire 12 localisé autour de ladite buse d'engagement et de guidage 9 sur partie de sa longueur. Le matériau thermoplastique M1 transite donc dans cet espace annulaire 12 ménagé dans le bloc de recouvrement 3.

L'orifice de sortie de la buse d'engagement et de guidage 9 débouche dans un espace de la buse de recouvrement 7, ledit espace s'étendant dans le prolongement de l'espace annulaire 12. Ainsi, lorsque la fibre de renfort 6 débouche de l'orifice de sortie de la buse d'engagement et de guidage 9, elle est enrobée par le matériau thermoplastique M1 fondu et ce dans la buse de recouvrement 7. Cette dernière, délivre alors le filament renforcé 8.

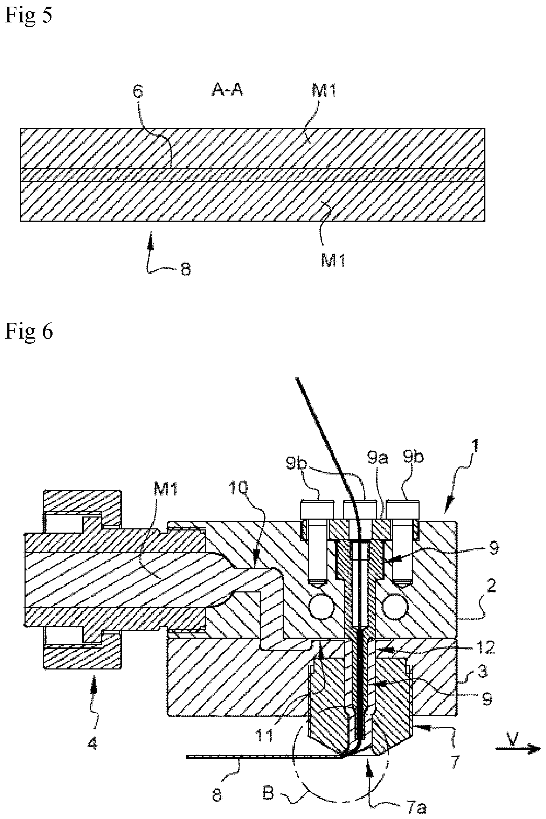

La figure 4 est une vue de face du filament renforcé 8 obtenu à l'aide de l'outillage d'extrusion 1 et la figure 5 est une vue selon une coupe A-A longitudinale dudit filament renforcé 8 de la figure 4. Le filament renforcé 8 comporte donc une âme constituée par la fibre de renfort 6 et un gainage constitué par le matériau thermoplastique M1.

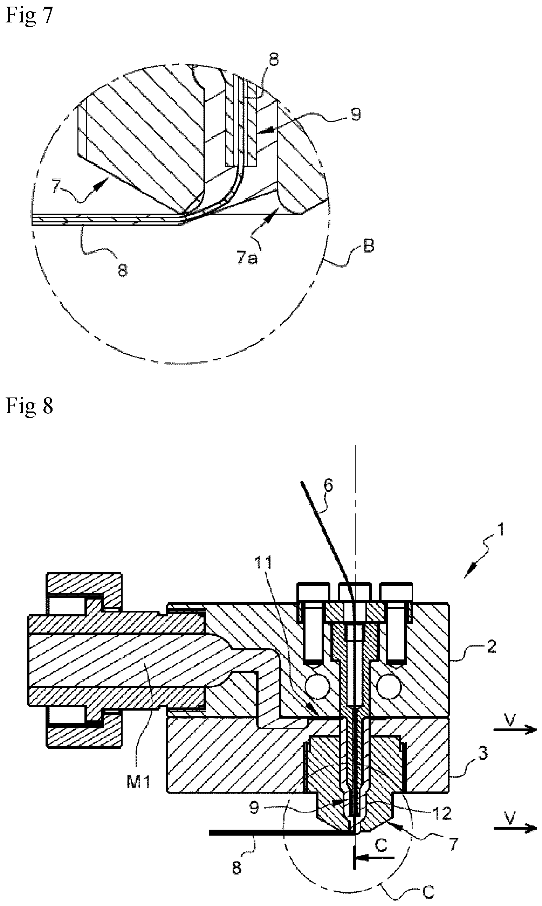

La figure 6 est une vue en coupe d'un autre exemple de réalisation et d'une utilisation de l'outillage d'extrusion 1 directement comme tête de dépose du filament renforcé 8. La figure 7 est un détail agrandi B de la figure 6. Dans cet exemple de réalisation, la buse de recouvrement 7 présente un orifice d'extrusion de révolution 7a évasé, du genre pavillon de trompette. Une telle forme facilite grandement le changement de direction de déplacement de l'outillage d'extrusion 1 lors de la dépose du filament renforcé 8 sur un support. La qualité des dépôts est donc améliorée.

La direction de déplacement de l'outillage d'extrusion 1 est par exemple indiquée par la flèche V.

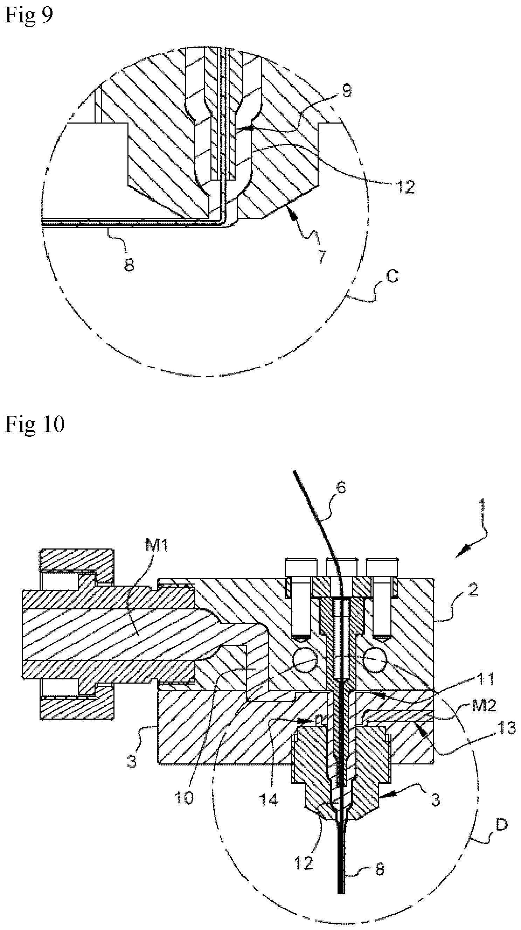

La figure 8 est une vue en coupe de l'outillage d'extrusion de la figure 2 dans le cadre d'une autre utilisation et la figure 9 est un détail agrandi C de la figure 8.

Il s'agit en effet à la figure 8 ou 9 d'une illustration d'une utilisation de l'outillage d'extrusion 1 directement comme tête de dépose du filament renforcé 8. La figure 2, en revanche, illustre une utilisation de l'outil d'extrusion 1, ne visant qu'à fabriquer le filament renforcé 8 pour une opération de dépose ultérieure par l'intermédiaire d'une tête de dépose ou d'impression 3D. La direction de déplacement de l'outillage d'extrusion 1 est par exemple indiquée par la flèche V.

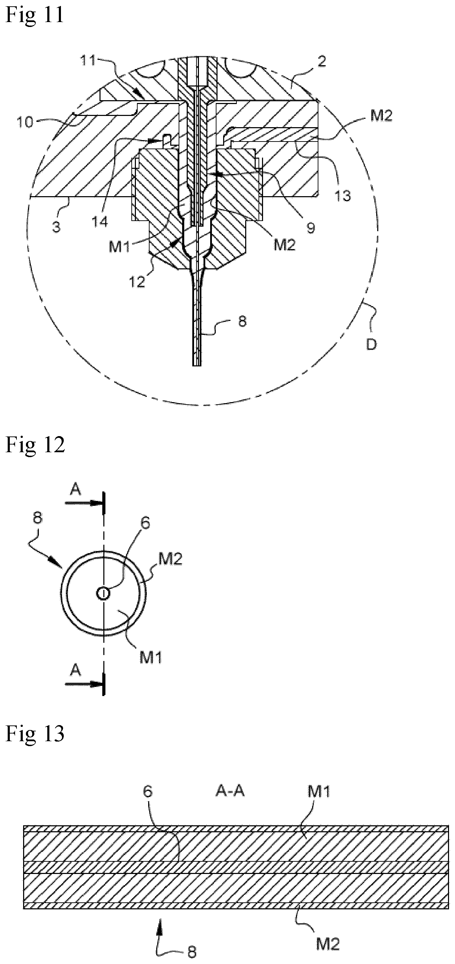

La figure 10 est une vue en coupe d'un autre exemple de réalisation de l'outillage d'extrusion 1 et la figure 11 est un détail agrandi D de la figure 10.

L'outillage d'extrusion 1 comporte un canal complémentaire 13 et un espace de répartition complémentaire 14 ménagés dans le bloc recouvrement 3 pour amener, sous pression, un autre matériau thermoplastique M2 fondu, délivré par un autre système d'alimentation et de fusion (non représenté), dans l'espace annulaire 12. L'espace de répartition complémentaire 14 s'étend en périphérie de l'espace annulaire 12 et débouche sur ledit espace annulaire 12. L'espace de répartition complémentaire 14 est localisé en aval de l'espace de répartition 11 dans le sens d'écoulement du matériau thermoplastique M1 en direction de l'orifice d'extrusion 7a de la buse de recouvrement 7.

L'outillage d'extrusion 1 illustré à la figure 10 peut également constituer une tête de dépose pour réaliser un dépôt direct du filament renforcé 8 sur un support.

Le matériau thermoplastique M1 transite donc dans l'espace annulaire 12 et l'autre matériau thermoplastique M2 s'étend autour du matériau thermoplastique M1 pour former une peau extérieure.

La figure 12 est une vue de face d'un autre exemple de filament renforcé 8 obtenu avec l'outillage d'extrusion 1 illustré à la figure 10 et la figure 13 est une vue en coupe longitudinale du filament renforcé 8 de la figure 12. Le filament renforcé 8 comporte donc une âme constituée de la fibre de renfort 6 et un gainage coextrudé comprenant un coeur formé par le matériau thermoplastique M1 et une peau extérieure formée par l'autre matériau thermoplastique M2.

Avantageusement, le matériau thermoplastique M1 et l'autre matériau thermoplastique M2 sont des matériaux différents et non miscibles, de sorte que l'autre matériau thermoplastique M2 forme une peau enveloppant un coeur formé par le matériau thermoplastique M1 enrobant la fibre de renfort 6.

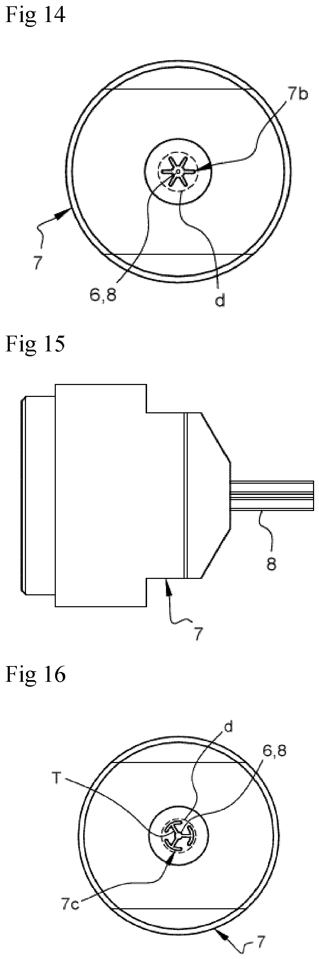

La figure 14 est une vue de face d'un exemple de réalisation d'une buse de recouvrement 7 de l'outillage d'extrusion 1 et la figure 15 est une vue de profil de la buse de recouvrement 7 de la figure 14. La buse de recouvrement 7 présente un orifice d'extrusion 7b, 7c dont la forme géométrique rainurée ou alvéolée s'inscrit dans un cercle de diamètre donné d et dont l'aire est inférieure à l'aire d'un cercle de même diamètre d. Ainsi l'orifice d'extrusion 7b illustré à la figure 14 présente une forme rainurée en étoile, laquelle conditionne la forme du filament renforcé 8 extrudé et illustré à la figure 15.

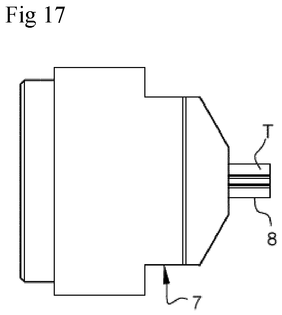

La figure 16 est une vue de face d'un autre exemple de réalisation d'une buse de recouvrement 7 de l'outillage d'extrusion 1 et la figure 17 est une vue de profil de la buse de recouvrement 7 de la figure 16. L'orifice d'extrusion 7c illustré à la figure 16 présente une forme à trois lobes en T, laquelle conditionne la forme du filament renforcé 8 extrudé et illustré à la figure 17.

Les différentes configurations des buses de recouvrement 7, plus précisément les différentes formes des orifices d'extrusion 7b et 7c desdites buses de recouvrement 7 sont compatibles avec la coextrusion de plusieurs couches superposées de matériaux thermoplastiques M1, M2. Un gainage avec une alternance de coeurs et de peaux est envisageable.

L'invention concerne également un système de fabrication additive par dépôt de fil. Un tel système de fabrication additive par dépôt de fil est déjà connu de façon générale et ne sera donc pas décrit ci-après dans tous les détails.

Le système de fabrication additive par dépôt de fil, conforme à l'invention, comprend une tête de dépose, l'outillage d'extrusion 1 tel que décrit ci-dessus et des organes d'actionnement pour déplacer ladite tête de dépose en translation selon trois axes orthogonaux ou suivant un déplacement vectoriel, dans un plan parallèle à un plan de dépose du filament renforcé 8.

Selon un mode de réalisation et d'utilisation, l'outillage d'extrusion 1 constitue avantageusement la tête de dépose.

Selon un autre mode de réalisation et d'utilisation, le système de fabrication additive par dépôt de fil comprend une tête de dépose, des organes d'actionnement pour déplacer ladite tête de dépose en translation selon trois axes orthogonaux ou suivant un déplacement vectoriel, dans un plan parallèle à un plan de dépose. Dans cet autre mode de réalisation et d'utilisation, le système de fabrication additive comprend l'outillage d'extrusion 1 décrit ci-dessus, par exemple avec une buse de recouvrement 7 présentant un orifice d'extrusion de révolution 7a évasé du genre pavillon de trompette, délivrant le filament renforcé 8 pour alimenter la tête de dépose. Cette dernière comprend alors des organes de chauffe complémentaires pour ramollir ou fondre le matériau thermoplastique M1 ou pour ramollir l'ensemble constitué par le matériau thermoplastique M1 enveloppé par l'autre matériau thermoplastique M2 et permettre ainsi d'effectuer une impression 3D du filament renforcé 8.

Selon un exemple de réalisation du système, l'outillage d'extrusion 1 est embarqué de manière à se déplacer avec la tête de dépose. L'outillage d'extrusion 1 peut avantageusement être monté sur l'organe de déplacement sur lequel est montée la tête de dépose.

Le système de fabrication additive conforme à l'invention comprend par ailleurs des moyens de commande pour commander en fin de l'opération de dépose, une accélération brusque du mouvement de déplacement ou une rétractation rapide de l'outillage d'extrusion 1, générant une élongation puis un sectionnement du filament renforcé 8. Ce sectionnement se produit au voisinage de la buse de recouvrement 7 sans qu'il soit nécessaire d'avoir recours à un moyen de coupe spécifique.

Selon un exemple de réalisation, les matériaux thermoplastiques M1, M2 mentionnés peuvent aussi comprendre une matière thermodurcissable ou toute autre matière pouvant être ramollie puis mise en forme sous pression par un principe d'extrusion. La matière fondue peut avantageusement expanser en sortie de de l'outillage d'extrusion 1 ou rester compacte.

Il est évident que la présente description ne se limite pas aux exemples explicitement décrits, mais comprend également d'autres modes de réalisation et/ou de mise en oeuvre. Ainsi, une caractéristique technique décrite est susceptible d'être remplacée par une caractéristique technique équivalente sans sortir du cadre de la présente invention tel que défini par les revendications.

## Revendications

1. Outillage d'extrusion (1) pour délivrer un filament renforcé (8) destiné à une fabrication additive par dépôt de fil, ledit filament renforcé (8) comportant une fibre de renfort (6) longue et continue, enrobée d'au moins un matériau thermoplastique (M1) comprenant :
- un bloc d'alimentation (2) associé à un système d'alimentation et de chauffe (4) du matériau thermoplastique (M1),
- une buse de recouvrement (7),
- une buse d'engagement et de guidage (9) traversant le bloc d'alimentation (2) et en partie la buse de recouvrement (7) pour engager et guider la fibre de renfort (6) à travers l'outillage d'extrusion (1),
- la buse d'engagement et de guidage (9) débouchant dans la buse de recouvrement (7),
- au moins un canal (10) aménagé dans le bloc d'alimentation (2) et au moins un espace de répartition (11) ménagé en périphérie d'une partie de la buse d'engagement et de guidage (9), de manière à acheminer sous pression le matériau thermoplastique (M1) fondu dans un espace annulaire (12) s'étendant autour de ladite buse d'engagement et de guidage (9) et enrober ainsi avec ledit matériau thermoplastique (M1) en fusion la fibre de renfort (6) dans la buse de recouvrement (7), dès sa sortie de la buse d'engagement et de guidage (9), **caractérisé en ce que** la buse de recouvrement (7) est montée sur un bloc de recouvrement (3), ledit boc de recouvrement (3) étant fixé sous le bloc d'alimentation (2), la buse d'engagement et de guidage (9) traversant le bloc de recouvrement (3) et l'espace de répartition (11) étant ménagé à l'interface du bloc d'alimentation (2) et du bloc de recouvrement (3).

2. Outillage d'extrusion (1) selon la revendication 1, **caractérisé en ce qu'**il comprend au moins un canal complémentaire (13) et au moins un espace de répartition complémentaire (14) aménagés dans le bloc recouvrement (3), ledit espace de répartition complémentaire (14) s'étendant en périphérie d'une partie de la buse d'engagement et de guidage (9), pour amener sous pression au moins un autre matériau thermoplastique (M2) en fusion, délivré par un autre système d'alimentation et de fusion, dans l'espace annulaire (12) entourant la buse d'engagement et de guidage (9) et contenant le matériau thermoplastique (M1) fondu, pour que ledit autre matériau thermoplastique (M2) s'étende autour du matériau thermoplastique (M1).

3. Outillage d'extrusion (1) selon la revendication 2, **caractérisé en ce qu'**il permet de coextruder un filament renforcé (8) et de réaliser un gainage de la fibre de renfort (6) avec le matériau thermoplastique (M1) et l'autre matériau thermoplastique (M2), lesquels sont des matériaux différents et non miscibles, de sorte que l'autre matériau thermoplastique (M2) forme une peau enveloppant un coeur formé par le matériau thermoplastique (M1) enrobant la fibre de renfort (6).

4. Outillage d'extrusion (1) selon l'une quelconque des revendications 1 à 3, **caractérisé en ce que** la buse de recouvrement (7) présente un orifice d'extrusion (7a) de révolution, évasé, du genre pavillon de trompette, permettant d'améliorer la qualité de dépose du filament renforcé (8) comportant la fibre de renfort (6).

5. Outillage d'extrusion (1) selon l'une quelconque des revendications 1 à 3, **caractérisé en ce que** la buse de recouvrement (7) présente un orifice d'extrusion (7b, 7c) dont la forme géométrique, du genre rainurée ou alvéolée, s'inscrit dans un cercle de diamètre donné (d) et dont l'aire est inférieure à l'aire d'un cercle de même diamètre (d).

6. Système de fabrication additive par dépôt de fil comprenant une tête de dépose, un outillage d'extrusion (1) conforme à l'une quelconque des revendications 1 à 4 et des organes d'actionnement pour déplacer la tête de dépose en translation selon trois axes orthogonaux ou suivant un déplacement vectoriel ou suivant un déplacement polaire ou tripode, dans un plan parallèle à un plan de dépose du filament renforcé (8), l'outillage d'extrusion (1) constituant la tête de dépose.

7. Système de fabrication additive selon la revendication 6, **caractérisé en ce qu'**il comprend des moyens de commande pour commander en fin de l'opération de dépose, une accélération brusque du mouvement de déplacement ou une rétractation rapide de l'outillage d'extrusion (1), générant une élongation puis un sectionnement du filament renforcé (8) au voisinage de la buse de recouvrement (7).

8. Système de fabrication additive par dépôt de fil comprenant une tête de dépose, des organes d'actionnement pour déplacer la tête de dépose en translation selon trois axes orthogonaux ou suivant un déplacement vectoriel ou suivant un déplacement polaire ou tripode, dans un plan parallèle à un plan de dépose, ledit système comprenant un outillage d'extrusion (1) conforme à la revendication 5, délivrant le filament renforcé (8) pour alimenter la tête de dépose, laquelle comprend des organes de chauffe complémentaires pour ramollir le matériau thermoplastique (M1) ou pour ramollir le matériau thermoplastique (M1) enveloppé par l'autre matériau thermoplastique (M2) et permettre ainsi d'effectuer une impression 3D du filament renforcé (8).

9. Système de fabrication additive selon la revendication 8, **caractérisé en ce que** l'outillage d'extrusion (1) est embarqué de manière à se déplacer avec la tête de dépose.
